# FASCICULE DE BREVET EUROPEEN

(11) **EP 0 766 526 B1**
(45) Date de publication et mention de la délivrance du brevet: **04.07.2001**
(21) Numéro de dépôt: 95923396.6
(22) Date de dépôt: 16.06.1995
(51) Int. Cl.: A47J 31/54

(54) **DISPOSITIF DE PRODUCTION D'EAU CHAUDE OU DE VAPEUR**
VORRICHTUNG ZUR BEREITUNG VON HEISSWASSER ODER DAMPF
DEVICE FOR PRODUCING HOT WATER OR STEAM

(30) Priorité: 20.06.1994 FR 9407748
(43) Date de publication de la demande: 09.04.1997
(73) Titulaire: SEB S.A., 21260 Selongey (FR)
(72) Inventeur: CHARLES, Patrick, F-65290 Louey (FR); TEULE, Maurice, F-65000 Tarbes (FR); ROUCHES, Alexandre, F-65000 Tarbes (FR)
(86) Numéro de dépôt international: FR9500795
(87) Numéro de publication internationale: WO9535057

(56) Documents cités:
- EP-A- 0 162 958
- EP-A- 0 432 460
- DE-A- 2 258 897
- DE-A- 3 840 102
- DE-U- 8 618 149
- FR-A- 2 588 739
- FR-A- 2 685 187
- NL-A- 7 505 052
- NL-A- 8 101 610
- PATENT ABSTRACTS OF JAPAN vol. 16 no. 277 (C-0954) ,22 Juin 1992 & JP,A,04 073018 (MATSUSHITA ELECTRIC IND CO LTD) 9 Mars 1992,

## Description

### DOMAINE TECHNIQUE

La présente invention se rapporte au domaine des appareils destinés à fournir de l'eau chaude et/ou de la vapeur pour différentes opérations telles que, la préparation de boissons chaudes, le nettoyage, le repassage ou la cuisson d'aliments. L'invention concerne plus particulièrement la structure et le fonctionnement d'une chaudière ou unité de chauffe, agencée par exemple dans une machine à café du type filtre ou expresso. D'autres appareils tels que des aspirateurs, fers à repasser ou cuiseurs fonctionnant avec de la vapeur sont également concemés et ne sortent pas du cadre de la présente invention.

### TECHNIQUE ANTERIEURE

II est déjà connu, et notamment par l'intermédiaire du document EP-A-0.432.460 de réaliser des chaudières, pour machines à boissons chaudes, de forme particulière, pour transférer et chauffer de l'eau avec une meilleure efficacité. La chaudière décrite dans ce document de l'art antérieur comporte un élément chauffant en relation thermique avec un tuyau de circulation d'eau. L'élément chauffant et le tuyau présentent une forme sensiblement en U avec des portions d'entrée et de sortie verticales et une portion intermédiaire légèrement inclinée et montante par rapport à l'horizontale dans le sens de circulation de l'eau. En outre l'élément chauffant comporte quatre zones de chauffe différentiées et réparties le long du tuyau de circulation d'eau. Une telle conception permet notamment d'évacuer vers la portion de sortie les bulles de vapeur en évitant leur retour vers la portion d'entrée du tuyau.

L'inconvénient d'une chaudière telle que décrite dans le document EP-A-0.432.460 est d'une part l'impossibilité d'utiliser ladite chaudière pour produire de l'eau chaude ou de la vapeur à la convenance de l'utilisateur et d'autre part une complexité de fabrication ou de réalisation augmentant son coût.

Une unité de chauffe selon le préambule de la revendication 1 est connue du document JP 04 073018.

### EXPOSE DE L'INVENTION

L'objet de la présente invention vise à réaliser une chaudière ne comportant pas les inconvénients de l'art antérieur et permettant d'accroître les performances tant au niveau de la température obtenue pour l'eau chaude, qu'au niveau de la rapidité de préparation des boissons ou de production de vapeur. Une telle unité de chauffe a également pour objet d'augmenter la durée de présence d'une grande partie de l'eau dans une chaudière, de manière à optimiser la température de toute l'eau chaude distribuée.

Un autre objet de la présente invention vise à fournir une unité de chauffe permettant de distribuer de l'eau chaude ou de la vapeur à la convenance de l'utilisateur.

Un objet supplémentaire de la présente invention vise à réaliser une unité de chauffe permettant de distribuer soit de l'eau chaude soit de la vapeur avec un nombre limité de pièces et donc de réduire le coût d'un tel dispositif.

Les objets assignés à l'invention sont atteints à l'aide d'une unité de chauffe pour appareil électroménager constituée d'un tuyau de circulation d'eau, l'organe distributeur (10) permettant la mise en communication du tuyau de circulation (21) avec l'un ou l'autre des orifices (11) (12) en relation thermique avec l'élément chauffant, permettant de transférer l'eau contenue dans un réservoir vers l'organe distributeur, à travers respectivement une colonne de liaison disposée en dessous du réservoir, et le tuyau de circulation, ladite colonne étant munie d'un clapet anti-retour, ledit tuyau de circulation présentant une configuration en deux parties associées chacune à une portion de l'élément chauffant, la seconde partie étant montante pour amener l'eau vers l'organe distributeur, la première partie s'étendant entre la colonne de liaison et ladite seconde partie, la première partie étant orientée angulairement par rapport à ladite seconde partie, caractérisée en ce que la première partie s'étend de manière inclinée et descendante dans le sens de l'écoulement de l'eau, et en ce que l'organe distributeur comporte un premier orifice laissant s'échapper l'eau chaude par gravité, et un second orifice présentant un rétrécissement permettant de produire de la vapeur à partir de l'eau contenue dans le tuyau de circulation,

### DESCRIPTION SOMMAIRE DES DESSINS

Les caractéristiques et les avantages de l'invention ressortiront mieux à la lecture de la description donnée ci-après en référence aux dessins annexés donnés à titre d'exemples non limitatifs dans lesquels :
- la figure 1 représente une vue d'ensemble en coupe d'une unité de chauffe conforme à la présente invention,
- la figure 2 représente une vue en coupe d'une partie de l'unité de chauffe conforme à la présente invention,
- la figure 3 représente une variante de réalisation de l'unité de chauffe conforme à l'invention.

### MEILLEURE MANIERE DE REALISER L'INVENTION

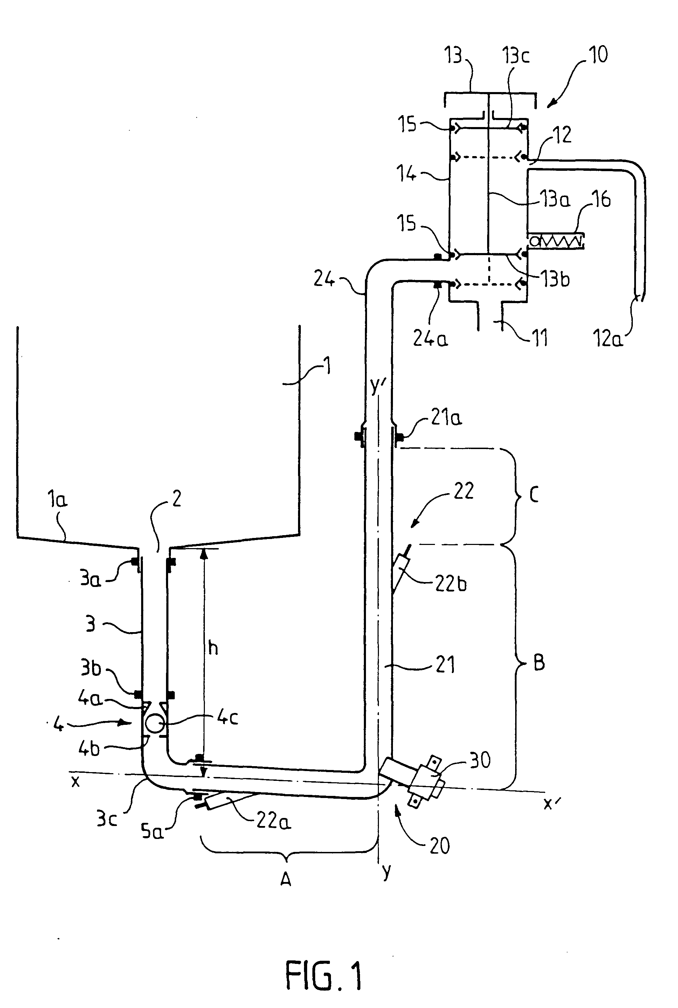

La figure 1 représente une vue d'ensemble en coupe de l'unité de chauffe conforme à l'invention, et permet par la même occasion de visualiser le fonctionnement de ladite unité de chauffe. L'unité de chauffe comporte un réservoir 1, un organe distributeur 10, une chaudière 20 ainsi que des moyens de raccordement entre ces différents éléments. Le réservoir 1 de stockage d'eau est agencé, fixé ou logé par tout moyen à l'intérieur de l'appareil de préparation de boissons chaudes par exemple.

Le réservoir 1 comporte un fond 1a dans lequel est ménagée une ouverture 2 pour évacuer l'eau stockée dans ledit réservoir 1, lors du fonctionnement de l'unité de chauffe. L'ouverture 2 débouche dans une colonne de liaison 3 dans laquelle est agencé un clapet anti-retour 4. La colonne de liaison 3 présente une forme tubulaire d'un diamètre interne préférentiel de 10 millimètres environ. La colonne de liaison 3 est également en communication avec la chaudière 20.

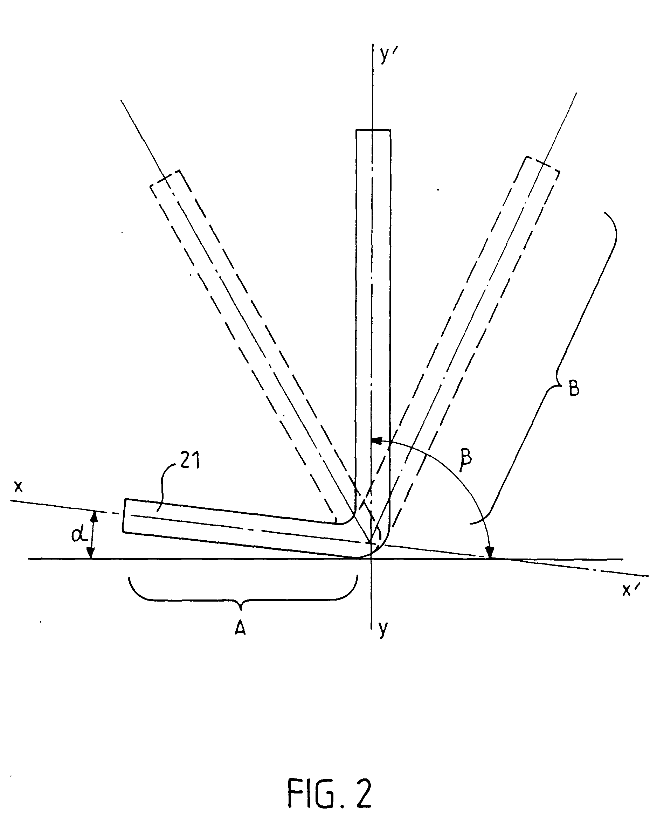

Dans l'exemple de réalisation représenté à la figure 1, la colonne de liaison 3 communique avec la chaudière 20 par l'intermédiaire d'une pièce présentant une forme coudée 3c. La colonne de liaison 3 est également constituée d'une partie verticale contenant préférentiellement le clapet anti-retour 4. La portion sensiblement horizontale de la forme coudée 3c vient se fixer sur une extrémité de la chaudière 20 de manière à permettre le transfert de l'eau contenue dans le réservoir 1 et dans la colonne de liaison 3 vers ladite chaudière 20. La colonne de liaison 3 présente une hauteur h de préférence comprise entre 90 et 120 millimètres. Une telle hauteur h permet de donner une force suffisante à l'eau contenue dans la colonne de liaison 3 pour pénétrer dans la chaudière 20 lorsque le clapet anti-retour 4 est ouvert. Les bruits de fonctionnement, ainsi que la vapeur produite sont ainsi réduits lorsque le réservoir 1 est presque vide. La hauteur h est définie avantageusement par la distance prise verticalement et séparant une ligne horizontale tracée à partir du fond 1a du réservoir 1 et un axe x-x' défini par la chaudière 20. La distance définie par la hauteur h est localisée à l'entrée de la chaudière 20. La colonne de liaison 3 est par exemple constituée d'une durite en silicone. La chaudière 20 est constituée d'un tuyau de circulation 21 en relation thermique avec un élément chauffant 22 pour permettre le transfert de l'eau contenue dans le réservoir 1 à travers ledit tuyau de circulation 21 vers un organe distributeur 10. La chaudière 20 représentée aux figures 1 et 2 présente une configuration pouvant être décrite par l'intermédiaire d'une distinction faite entre une première partie A et une seconde partie B correspondant à ladite configuration. La première partie A et la seconde partie B s'étendent selon des directions orientées angulairement l'une par rapport à l'autre.

La seconde partie B est montante pour amener l'eau vers l'organe distributeur 10 et la première partie A s'étend entre la seconde partie B montante et la colonne de liaison 3. La première partie A est également légèrement inclinée et montante dans le sens opposé à l'écoulement de l'eau, c'est à dire vers la colonne de liaison 3. La première partie A s'étend selon l'axe x-x' présentant par rapport à sa projection orthogonale sur un plan horizontal, une inclinaison supérieure ou égale à 4° et de préférence comprise entre 5° et 10°. Une projection orthogonale sur un plan horizontal est définie comme une trace horizontale. En outre la seconde partie B présente une inclinaison d'un angle β, par rapport à sa projection orthogonale sur un plan horizontal par exemple compris entre 45° et 135° et de préférence compris entre 45° et 100°.

La figure 2 représente avantageusement un plan d'extension vertical défini par la première partie A et la seconde partie B, ledit plan d'extension devant cependant être considéré dans l'espace. Le plan d'extension défini par la première partie A et la seconde partie B est par exemple incliné par rapport à un plan fictif vertical contenant la première partie A, d'un angle compris de préférence entre 0° et 45°.

La figure 2 représente les inclinaisons préférentielles du tuyau de circulation 21 de la chaudière 20. Ainsi la seconde partie B s'étend selon un axe y-y' vertical et la première partie A s'étend selon un axe x-x' incliné d'un angle a par rapport à sa trace horizontale. L'angle a est supérieur ou égal à 4° et de préférence compris en 5° et 10°.

Selon un mode de réalisation de l'unité de chauffe conforme à l'invention, la seconde partie B s'étend selon un axe y-y' présentant une inclinaison par rapport à sa trace horizontale comprise entre 45° et 135° et de préférence comprise entre 45° et 100°. Il est évident que l'élément chauffant 22 présente la même configuration que le tuyau de circulation 21 de manière à être en relation thermique intime sur toute sa longueur avec ledit tuyau de circulation 21. Les extrémités 22a et 22b de l'élément chauffant 22 présentent avantageusement une inclinaison s'écartant du tuyau de circulation 21 pour faciliter la mise en place des connexions électriques non représentées aux figures.

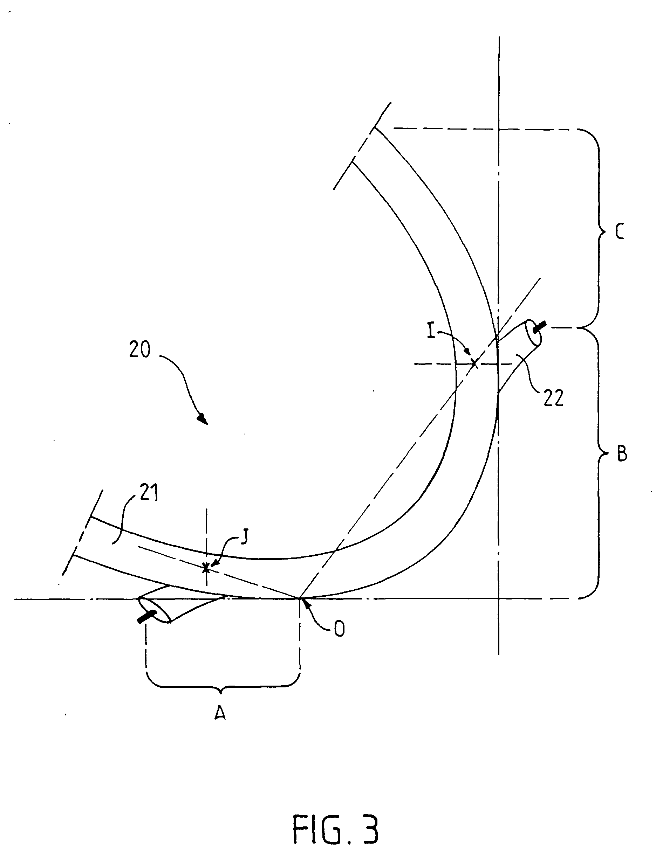

Selon une autre variante de réalisation de l'unité de chauffe conforme à la présente invention et représentée à la figure 3, au moins une des parties A ou B présente une forme incurvée définie par au moins un rayon de courbure. L'unité de chauffe peut également comporter des segments rectilignes et des segments incurvés en combinaison pour présenter un encombrement adapté à l'appareil sur lequel l'unité de chauffe est montée. Avantageusement, des portions rectilignes et fictives peuvent être définies pour satisfaire aux inclinaisons préférentielles conformes à la présente invention. Ainsi, un point O est défini au point de tangence du tuyau de circulation 21 par rapport à un plan horizontal. Des points I et J sont définis par le centre d'une section transversale du tuyau de circulation 21 localisés à des niveaux correspondant aux extrémités de l'élément chauffant 22, lesdites extrémités étant en contact thermique direct avec le tuyau de circulation 21.

Les segments fictifs OJ et Ol sont donc assimilés respectivement à la première partie A et à la seconde partie B.

La chaudière 20 est constituée de deux tubes métalliques en relation thermique dont l'un constitue le tuyau de circulation 21 utilisé pour la circulation de l'eau, l'autre tube métallique réalisant un logement pour l'élément chauffant 22.

Selon une autre variante de réalisation de l'unité de chauffe conforme à l'invention, l'élément chauffant 22 peut être fixé ou solidarisé du tuyau de circulation 21 par tout moyen connu et notamment par soudage.

Avantageusement le tuyau de circulation 21 se prolonge selon l'axe x-x' au delà de l'extrémité de l'élément chauffant 22 pour réaliser une portion de tuyau de circulation 21 chauffée par conduction thermique. Le tuyau de circulation 21 comporte donc, au delà de la seconde partie B, une portion de longueur C chauffée uniquement par conduction thermique par la seconde partie B. L'élément chauffant 22 est de préférence constitué d'un élément chauffant blindé. Ce demier, en relation thermique avec le tuyau de circulation 21 présente un rendement thermique uniforme sur toute sa longueur. Le clapet anti-retour 4 connu en soi est constitué par exemple d'une bille sphérique 4c mobile par translation entre deux arrêts 4a et 4b contre lesquels elle vient se bloquer. Lorsque la bille sphérique 4c est en position haute contre l'arrêt 4a, l'écoulement de l'eau de la colonne de liaison 3 vers la chaudière 20 est interrompu et lorsque la bille sphérique 4c est en position basse contre l'arrêt 4b, l'écoulement de l'eau est autorisé par une configuration spécifique et connue dudit arrêt 4b. Le tuyau de circulation 21 comporte également à son extrémité un organe de liaison 24 permettant de transférer l'eau de la chaudière 20 vers l'organe distributeur 10. L'organe de liaison 24 présente avantageusement le même diamètre interne que le tuyau de circulation 21 et la colonne de liaison 3.

L'élément chauffant 22 est en relation thermique avec le tuyau de circulation 21 dans la première partie A sur une proportion de longueur de l'élément chauffant 22 inférieure à la proportion de longueur de l'élément chauffant 22 en relation thermique avec le tuyau de circulation 21 dans la seconde partie B. La répartition du transfert thermique entre l'élément chauffant 22 et le tuyau de circulation 21 correspond à des valeurs comprises entre 35 % et 45 % dans la première partie A et à des valeurs comprises entre 55 % et 65 % dans la seconde partie B.

Avantageusement la répartition du transfert thermique entre l'élément chauffant 22 et le tuyau de circulation 21 correspond respectivement à 40 % et 60 % dans la première partie A et dans la seconde partie B. Une telle répartition thermique permet notamment à l'eau expulsée de la chaudière 20 d'atteindre une température de 90°C pendant quasiment toute la phase de production d'eau chaude.

Selon une variante de réalisation de l'unité de chauffe conforme à l'invention la répartition du transfert thermique entre l'élément chauffant 22 et le tuyau de circulation 21, correspond dans la première partie A, à une valeur comprise entre 20% et 30% du transfert thermique total. La chaudière 20 est dans cet exemple de réalisation conforme à l'invention et composée de quatre zones, dont la première pseudo-horizontale correspond à la première partie A, et la deuxième correspond à une partie coudée formant la liaison entre la première partie A et la seconde partie B. Cette dernière, montante, correspond alors à la troisième zone.
La portion de largeur C, chauffée uniquement par conduction, peut avantageusement être assimilée à une quatrième zone de la chaudière 20. Le transfert thermique existant dans la deuxième et la troisième zone ainsi définies correspond sensiblement à une plage de 70% à 80% du transfert thermique total. La répartition de ce transfert thermique entre la deuxième zone et la troisième zone n'a pas d'importance.

L'unité de chauffe conforme à l'invention comporte également un thermostat 30 de régulation thermique dont une patte de fixation et de transfert thermique est agencée sur la chaudière 20 de préférence dans une zone interface entre la première partie A et la seconde partie B. En outre la zone de chauffe correspondant à la seconde partie B s'étend jusqu'à un niveau horizontal correspondant au niveau défini approximativement par le fond 1a du réservoir 1. Ainsi toute l'eau contenue dans la chaudière 20, et la portion de longueur C sont chauffées dès que l'élément chauffant 22 est alimenté. Seule une éventuelle petite quantité d'eau, se trouvant dans l'organe de liaison 24 avant la mise en route de l'unité de chauffe, présente un échauffement plus faible, lorsque le matériau constitutif dudit organe de liaison 24 n'est pas un conducteur thermique.

L'organe distributeur 10 dans lequel débouche l'organe de liaison 24 présente au moins deux voies d'expulsion dont l'une est destinée à l'eau chaude et l'autre à la vapeur. L'unité de chauffe comporte donc des moyens lui permettant de produire et de distribuer de l'eau chaude ou de la vapeur grâce à un organe de commande 13 actionné par l'utilisateur. Ainsi l'organe distributeur 10 comporte un premier orifice 11 laissant s'échapper l'eau chaude par gravité et un second orifice 12 présentant un rétrécissement 12a permettant de produire de la vapeur à partir de l'eau contenue dans le tuyau de circulation 21. L'organe distributeur 10 est constitué également de l'organe de commande 13 permettant de mettre en communication l'organe de liaison 24 avec le premier orifice 11 ou le second orifice 12.

Selon un exemple de réalisation de l'unité de chauffe conforme à l'invention, l'organe de commande 13 est constitué d'une tige 13a par exemple métallique se déplaçant par translation dans un corps cylindrique 14. La tige rigide 13a comporte également deux disques 13b et 13c espacés et s'étendant dans des plans d'extension perpendiculaires à ladite tige 13a rigide de manière à réaliser un piston se déplaçant par translation dans le corps cylindrique 14. Les disques 13c et 13b présentent un diamètre sensiblement voisin du diamètre interne du corps cylindrique 14. Les disques 13c et 13b présentent également sur toute leur périphérie un logement pour un joint d'étanchéité 15 permettant de rendre étanches les différents compartiments ainsi réalisés dans le corps cylindrique 14. La figure 1 montre par exemple l'organe de commande 13 dans une position adaptée pour laisser s'échapper l'eau chaude par gravité à travers le premier orifice 11. Les lignes pointillées représentent les disques 13c et 13b lorsque l'organe de commande 13 dans une position adaptée pour mettre en communication l'organe de liaison 24 avec le second orifice 12 à travers un compartiment défini entre les disques 13b et 13c dans le corps cylindrique 14. Cette demière position correspond à un réglage de l'organe de commande 13 pour produire de la vapeur à partir de l'eau contenue dans la chaudière 20. Le corps cylindrique 14 comporte également une soupape de sécurité 16 lorsqu'on utilise l'unité de chauffe conforme à l'invention pour produire de la vapeur. La soupape de sécurité 16 est avantageusement agencée sur la partie du corps cylindrique 14 dans laquelle s'établit une pression de vapeur d'eau.

L'unité de chauffe conforme à l'invention comporte également des colliers de serrage 3a, 3b, 5a, 21a et 24a dans les zones d'assemblage des différents éléments tubulaires constituant un conduit pour amener l'eau du réservoir 1 et le cas échéant la vapeur de la chaudière 20 vers l'organe distributeur 10. L'étanchéité et la résistance à la pression sont ainsi réalisées. L'assemblage et le serrage desdits colliers de serrage 3a, 3b, 5a, 21 a et 24a sur les éléments tubulaires se fait par tout moyen connu. Le collier de serrage 3b est utilisé pour empêcher le clapet anti-retour 4 de se déplacer dans la colonne de liaison 3.

Selon un autre exemple de réalisation de l'unité de chauffe conforme à l'invention l'organe distributeur 10 est constitué d'une vanne comportant au moins trois voies, susceptible de mettre en communication le tuyau de circulation 21 soit avec le premier orifice 11 soit avec le second orifice 12. Une telle vanne est constituée par exemple de disques céramiques munis de différents orifices susceptibles de venir en regard les uns des autres pour mettre en communication différentes voies de circulation de l'eau chaude ou de la vapeur. Selon un exemple de réalisation de l'unité de chauffe conforme à l'invention, les dimensions de la première partie A et de la seconde partie B sont respectivement 75 millimètres et 100 millimètres. La puissance de l'élément chauffant 22 est comprise entre 500 et 1 200 Watts. Pour la production d'eau chaude, la puissance est comprise de préférence entre 1 000 et 1 200 Watts et pour la production de vapeur, la puissance est comprise de préférence entre 500 et 600 Watts.

L'unité de chauffe conforme à l'invention permet donc d'obtenir un fonctionnement préférentiel soit lors de la production d'eau chaude, soit lors de la production de vapeur. Avant la mise en route de l'unité de chauffe, c'est à dire avant l'alimentation électrique de l'élément chauffant 22, une partie de l'eau contenue dans le réservoir 1 traverse le clapet anti-retour 4 sous l'effet de la pesanteur et s'écoule dans la chaudière 20. Le niveau d'eau atteint dans la seconde partie B ou dans la portion de longueur C ou dans l'organe de liaison 24 est déterminé par le principe des vases communicants. Ainsi, le fait de réaliser la chaudière 20 avec l'élément chauffant 22 dont l'extrémité 22b s'étend jusqu'à un niveau voisin du fond 1a d'une part, et avec une portion de longueur C chauffée par conduction thermique permet de diminuer voire de supprimer l'existence d'une quantité d'eau froide expulsée par l'organe distributeur 10 en début de fonctionnement de l'unité de chauffe. Lorsque l'élément chauffant 22 est alimenté par un courant électrique il se produit un premier échauffement et donc une légère évaporation dans la première partie A avec des bulles de vapeur d'eau se déplaçant en direction du clapet anti-retour 4. Il s'établit ainsi dans la zone située en dessous du clapet anti-retour 4 une pression faisant remonter la bille 4c en butée contre l'arrêt 4a de manière à obturer le passage de l'eau et à éviter une arrivée d'une quantité d'eau supplémentaire dans la chaudière 20. La dissipation thermique de l'élément chauffant 22 contribue alors à un échauffement de plus en plus important de l'eau contenue dans la seconde partie B ainsi que dans la première partie A pour créer une poussée suffisante, laquelle permet de faire monter l'eau vers l'organe de liaison 24 et de l'évacuer par le premier orifice 11 de l'organe distributeur 10. Le premier orifice 11 présente à ce titre une dimension ou un diamètre supérieur au diamètre interne du tuyau de circulation 21. La seconde partie B, c'est à dire la portion montante de la chaudière 20 permet de créer une poussée suffisante en favorisant l'apparition de bulles de vapeur plus importantes en volume et en température. Lorsqu'une partie de l'eau contenue dans une portion de la partie B de la chaudière 20 est évacuée par le premier orifice 11, il se crée une légère dépression dans la chaudière 20 et surtout au niveau du clapet anti-retour 4. La bille 4c se trouve aspirée vers le bas contre l'arrêt 4b de manière à permettre à une petite quantité d'eau du réservoir 1 d'atteindre la chaudière 20.

Le même phénomène se reproduit par petits cycles et avec de petites quantités d'eau jusqu'à ce que le réservoir 1 soit vide. L'aspiration d'une petite quantité d'eau lors de chaque cycle correspondant à l'expulsion d'une autre quantité d'eau de la chaudière 20 permet d'éviter une expulsion d'une eau froide ou tiède de la chaudière 20 après le premier cycle de fonctionnement. L'eau ainsi aspirée ou admise dans la chaudière 20 après le premier cycle de fonctionnement se trouve mélangée avec de l'eau déjà chaude contenue dans ladite chaudière 20. Ainsi aucune eau de température insuffisante n'est distribuée par l'unité de chauffe lors du fonctionnement. L'inclinaison du tube métallique 21 dans la première partie A permet un déplacement dans la direction du clapet anti-retour 4 de bulles de vapeur produites dans cette même première partie A pour obturer l'arrivée d'eau et favoriser l'expulsion de l'eau de la chaudière 20.

Lorsque l'utilisateur décide de produire de la vapeur il sélectionne à l'aide de l'organe de commande 13 la position vapeur qui correspond à l'obturation du premier orifice 11 et à la mise en communication de l'organe de liaison 24 avec le second orifice 12 de l'organe distributeur 10. Le second orifice 12 est relié à un rétrécissement 12a présentant par exemple un diamètre d'expulsion de 1,4 millimètre. Le diamètre de rétrécissement 12a est bien évidemment fonction de la puissance avec laquelle est produite la vapeur d'eau. Le rétrécissement 12a est un obstacle freinant l'expulsion de l'eau chaude contenue dans la chaudière 20. Cet obstacle à l'écoulement conduit à une durée de présence plus longue de l'eau dans la chaudière 20 et provoque ainsi un échauffement plus important de ladite eau. Ce dernier provoque une vaporisation plus importante et par conséquent une production de vapeur d'eau. Cette production de vapeur d'eau augmente la pression à l'intérieur de la chaudière 20 de manière à bloquer par l'intermédiaire du clapet anti-retour 4 l'arrivée de nouvelles quantités d'eau froide du réservoir 1. L'obturation de la colonne de liaison 3 se poursuit jusqu'à l'évaporation quasi complète de l'eau contenue dans la chaudière 20. La pression régnant à l'intérieur de la chaudière 20, permet l'évacuation complète de l'eau en phase vapeur et provoque par conséquent un déplacement de la bille 4c pour aspirer par dépression une quantité d'eau remplissant à nouveau la première partie A et au moins partiellement la seconde partie B du tuyau de circulation 21 de la chaudière 20. L'eau évacuée totalement du tuyau de circulation 21 provoque également une dépression aspirant une nouvelle quantité d'eau. Un tel cycle peut se reproduire tant qu'il y a de l'eau disponible dans le réservoir 1.

La colonne de liaison 3 présente à ce titre, une forme coudée 3c, sensiblement inclinée selon l'axe x-x' d'une longueur adaptée aux cycles de vaporisation. En effet, plus la forme coudée 3c venant se fixer sur le tuyau de circulation 21 est importante, plus grande sera la quantité admise dans ledit tuyau de circulation 21. La quantité de vapeur produite est augmentée en conséquence. La durée de chaque cycle de vaporisation dépend également de la puissance de l'élément chauffant 22.

L'unité de chauffe selon une autre variante de réalisation conforme à la présente invention, est associée à une pompe permettant d'augmenter la pression du fluide. La pompe est avantageusement située en aval de la chaudière 20 pour augmenter la pression de l'eau distribuée. La pompe, non représentée aux figures, ou un dispositif de pompage additionnel est particulièrement avantageux pour la préparation de café expresso. Selon une autre variante conforme à l'invention, l'unité de chauffe est agencée dans un dispositif de nettoyage à jet de vapeur ou dans un générateur de vapeur pour fer à repasser.

L'avantage de l'unité de chauffe conforme à l'invention réside dans son extrême simplicité ainsi que dans son utilisation permettant de produire soit de l'eau chaude, soit de la vapeur. Il n'est ainsi plus indispensable d'utiliser une chaudière 20 spécifique ou un autre dispositif pour produire de la vapeur d'eau. La vapeur peut être produite tant qu'il y a de l'eau dans le réservoir 1, en alternance éventuellement avec une production et une distribution d'eau chaude.

Un autre avantage de l'unité de chauffe conforme à l'invention, réside dans la configuration particulière de la chaudière 20 permettant une première phase d'évaporation dans la première partie A n'aboutissant pas à une première expulsion d'eau chaude n'ayant pas atteint une température suffisante. Les premières bulles de vapeur se déplaçant vers le clapet anti-retour 4, dans cette première permettant de contenir toute l'eau contenue dans la chaudière 20, en échange thermique avec l'élément chauffant 22 de manière à n'expulser ladite eau que lorsqu'elle aura atteint une température supérieure à 90°. Une éventuelle distribution d'eau n'ayant pas atteint une température requise ne peut concerner qu'un faible volume d'eau d'une part et ne peut concerner que le premier cycle d'expulsion d'eau d'autre part. La portion du tuyau de circulation 21 s'étendant au delà de l'extrémité de l'élément chauffant 22 de la seconde partie B évite également un refroidissement prématuré de l'eau expulsée de ladite chaudière.

Un avantage supplémentaire de l'unité de chauffe conforme à l'invention réside dans la production d'eau chaude à une température supérieure à 90° permettant ainsi dans une application relative à une machine à café d'obtenir une boisson finie, en l'occurrence du café d'une température plus élevée. Une telle amélioration en température permet aisément à l'utilisateur de mélanger sa boisson avec du lait ou un autre liquide d'une température ambiante. L'extraction se trouve optimisée par la même occasion avec une température supérieure à 90°C, avec des bruits de fonctionnement et des phases vapeur très faibles.

Un avantage complémentaire de l'unité de chauffe conforme à l'invention est l'utilisation d'un seul thermostat 30 pour la phase eau chaude et la phase vapeur. L'utilisation du thermostat 30 permet de couper l'alimentation de l'élément chauffant 22, lorsque la température de la chaudière augmente au delà d'un certain seuil. Ce dernier est atteint en général lorsque toute l'eau contenue dans le tuyau de circulation 21 et dans le réservoir 1 est évaporée. Les détériorations liées à des surchauffes sont ainsi évitées, et en particulier au niveau des connexions avec des éléments plastiques ou silicones, tels que des durites par exemple.

La portion de longueur C, laquelle n'est pas directement en contact avec l'élément chauffant 22, constitue en outre un frein ou tampon thermique vis à vis de l'organe de liaison 24, réalisé par exemple en silicone.

Par ailleurs, la production de vapeur et l'admission d'eau froide en alternance permet d'obtenir des chocs thermiques dans la chaudière 20. De tels phénomènes s'avèrent particulièrement avantageux pour décoller ou désolidariser des couches de tartre déposées à l'intérieur du tuyau de circulation 21.

### POSSIBILITES D'APPLICATION INDUSTRIELLE

la présente invention trouve son application en particulier dans des appareils de préparation de boissons chaudes, du type cafetières électriques.

## Revendications

1. Unité de chauffe pour appareil électroménager comportant un tuyau de circulation (21) d'eau, un élément chauffant (22), et un organe distributeur (10), le tuyau de circulation étant en relation thermique avec l'élément chauffant (22), permettant de transférer l'eau contenue dans un réservoir (1) vers l'organe distributeur (10), à travers respectivement une colonne de liaison (3) disposée en dessous du réservoir (1), et le tuyau de circulation (21), ladite colonne (3) étant munie d'un clapet anti-retour (4), ledit tuyau de circulation (21) présentant une configuration en deux parties (A, B) associées chacune à une portion de l'élément chauffant (22), la seconde partie (B) étant montante pour amener l'eau vers l'organe distributeur (10), la première partie (A) s'étendant entre la colonne de liaison (3) et ladite seconde partie (B), la première partie (A) étant orientée angulairement par rapport à ladite seconde partie (B) caractérisée en ce que la première partie (A) s'étend de manière inclinée et descendante dans le sens de l'écoulement de l'eau, et en ce que l'organe distributeur (10) comporte un premier orifice (11) laissant s'échapper l'eau chaude par gravité, et un second orifice (12) présentant un rétrécissement (12a) permettant de produire de la vapeur à partir de l'eau contenue dans le tuyau de circulation (21), l'organe distributeur (10) permettant la mise en communication du tuyau de circulation (21) avec l'un ou l'autre des orifices (11) (12).

2. Unité de chauffe selon la revendication 1 caractérisée en ce que la première partie (A) s'étend selon un axe (x-x') présentant une inclinaison par rapport à sa projection orthogonale sur un plan horizontal supérieure ou égale à 4° et de préférence comprise entre 5° et 10°.

3. Unité de chauffe selon l'une des revendications 1 à 2 caractérisée en ce que la seconde partie (B) s'étend selon un axe (y-y') présentant une inclinaison par rapport à sa projection orthogonale sur un plan horizontal, ladite inclinaison étant comprise entre 45° et 135° et de préférence comprise entre 45° et 100°.

4. Unité de chauffe selon l'une des revendications 1 à 3 caractérisée en ce qu'au moins l'une des parties (A, B) présente une forme incurvée définie par au moins un rayon de courbure.

5. Unité de chauffe selon l'une des revendications 1 à 4 caractérisée en ce que l'élément chauffant (22) présente un rendement thermique uniforme sur toute sa longueur.

6. Unité de chauffe selon l'une des revendications 1 à 5 caractérisée en ce que l'élément chauffant (22) est en relation thermique avec le tuyau de circulation (21) dans la première partie (A) sur une proportion de longueur de l'élément chauffant (22) inférieure à la proportion de longueur de l'élément chauffant (22) en relation thermique avec le tuyau de circulation (21) dans la seconde partie (B).

7. Unité de chauffe selon la revendication 6 caractérisée en ce que la répartition du transfert thermique entre l'élément chauffant (22) et le tuyau de circulation (21) correspond à des valeurs comprises entre 35 % et 45 % dans la première partie (A) et à des valeurs comprises entre 55 % et 65 % dans la seconde partie (B).

8. Unité de chauffe selon la revendication 6 caractérisée en ce que la répartition du transfert thermique entre l'élément chauffant (22) et le tuyau de circulation (21) correspond, dans la première partie (A), à une valeur comprise entre 20% et 30% du transfert thermique total.

9. Unité de chauffe selon l'une des revendications 1 à 8 caractérisée en ce qu'elle est constituée de deux tubes métalliques en relation thermique dont l'un constitue le tuyau de circulation (21) d'eau, l'autre tube métallique réalisant un logement pour l'élément chauffant (22).

10. Unité de chauffe selon l'une des revendications 1 à 9 caractérisée en ce que l'organe distributeur (10) est constitué d'une vanne comportant au moins trois voies, susceptible de mettre en communication le tuyau de circulation (21) soit avec le premier orifice (11), soit avec le second orifice (12).

11. Unité de chauffe selon l'une des revendications 1 à 10 caractérisée en ce que le tuyau de circulation (21) comporte au delà de la seconde partie (B), une portion de longueur (C) chauffée uniquement par conduction thermique par la seconde partie (B).

12. Unité de chauffe selon l'une des revendications 1 à 11 caractérisée en ce qu'elle est montée sur un appareil électroménager.

13. Cafetière électrique comportant une unité de chauffe conforme à l'une des revendications 1 à 12.

## Patentansprüche

1. Heizeinheit für Elektro-Haushaltsgeräte, mit einem Wasserzirkulationsrohr (21), einem Heizelement (22) und einem Ausgabeorgan (10), wobei das Zirkulationsrohr mit dem Heizelement (22) in Wärmeverbindung steht, wodurch das in einem Vorratsbehälter (1) enthaltene Wasser durch eine unterhalb des Vorratsbehälters (1) angeordnete Verbindungssäule (3) und durch das Zirkulationsrohr (21) zum Ausgabeorgan (10) übertragen werden kann, wobei die genannte Säule (3) mit einem Rückschlagventil (4) ausgestattet ist, wobei das Zirkulationsrohr (21) eine Gestaltung in zwei Teilen (A, B) aufweist, von denen jeder einem Bereich des Heizelements (22) zugeordnet ist, wobei der zweite Teil (B) ansteigt, um das Wasser zum Ausgabeorgan (10) zu leiten, wobei der erste Teil (A) sich zwischen der Verbindungssäule (3) und dem genannten zweiten Teil (B) erstreckt, wobei der erste Teil (A) unter einem Winkel zum zweiten Teil (B) angeordnet ist, dadurch gekennzeichnet, daß der erste Teil (A) sich geneigt und in Fließrichtung des Wassers abfallend erstreckt und daß das Ausgabeorgan (10) eine erste Öffnung (11), durch die das heiße Wasser durch Schwerkraft ausströmen kann, und eine zweite Öffnung (12) aufweist, die eine Verjüngung (12a) enthält, durch die aus dem im Zirkulationsrohr (21) enthaltenen Wasser Dampf erzeugt werden kann, wobei das Ausgabeorgan (10) es ermöglicht, das Zirkulationsrohr (21) mit der einen oder der anderen der Öffnungen (11) (12) in Verbindung zu bringen.

2. Heizeinheit nach Anspruch 1, dadurch gekennzeichnet, daß der erste Teil (A) sich entlang einer Achse (x-x') erstreckt, die bezogen auf seine Orthogonalprojektion auf eine horizontale Ebene eine Neigung aufweist, die größer oder gleich 4° ist und vorzugsweise zwischen 5° und 10° beträgt.

3. Heizeinheit nach Anspruch 1 und 2, dadurch gekennzeichnet, daß der zweite Teil (B) sich entlang einer Achse (y-y') erstreckt, die bezogen auf seine Orthogonalprojektion auf eine horizontale Ebene eine Neigung aufweist, wobei die genannte Neigung zwischen 45° und 135° und vorzugsweise zwischen 45° und 100° beträgt.

4. Heizeinheit nach einem der Ansprüche 1 bis 3, dadurch gekennzeichnet, daß zumindest einer der beiden Teile (A, B) eine gebogene Form aufweist, die durch mindestens einen Krümmungsradius bestimmt ist.

5. Heizeinheit nach einem der Ansprüche 1 bis 4, dadurch gekennzeichnet, daß das Heizelement (22) einen in seiner gesamten Länge gleichmäßigen thermischen Wirkungsgrad aufweist.

6. Heizeinheit nach einem der Ansprüche 1 bis 5, dadurch gekennzeichnet, daß das Heizelement (22) mit dem Zirkulationsrohr (21) im ersten Teil (A) in einem Teil der Länge des Heizelements (22) in Wärmeverbindung steht, der kleiner ist als der Teil der Länge des Heizelements (22), der mit dem Zirkulationsrohr (21) im zweiten Teil (B) in Wärmeverbindung steht.

7. Heizeinheit nach Anspruch 6, dadurch gekennzeichnet, daß die Verteilung der Wärmeübertragung zwischen dem Heizelement (22) und dem Zirkulationsrohr (21) im ersten Teil (A) einem Wert zwischen 35 % und 45 % und im zweiten Teil (B) einem Wert zwischen 55 % und 65 % entspricht.

8. Heizeinheit nach Anspruch 6, dadurch gekennzeichnet, daß die Verteilung der Wärmeübertragung zwischen dem Heizelement (22) und dem Zirkulationsrohr (21) im ersten Teil (A) einem Wert zwischen 20 % und 30 % der gesamten Wärmeübertragung entspricht.

9. Heizeinheit nach einem der Ansprüche 1 bis 8, dadurch gekennzeichnet, daß sie aus zwei in Wärmeverbindung stehenden Metallrohren besteht, von denen das eine das Wasserzirkulationsrohr (21) bildet, wobei das andere Metallrohr eine Aufnahme für das Heizelement (22) darstellt.

10. Heizeinheit nach einem der Ansprüche 1 bis 9, dadurch gekennzeichnet, daß das Ausgabeorgan (10) aus einem Ventil besteht, das zumindest drei Wege enthält und das Zirkulationsrohr (21) entweder mit der ersten Öffnung (11) oder mit der zweiten Öffnung (12) in Verbindung bringen kann.

11. Heizeinheit nach einem der Ansprüche 1 bis 10, dadurch gekennzeichnet, daß das Zirkulationsrohr (21) über den zweiten Teil (B) hinaus einen Längenbereich (C) aufweist, der nur durch Wärmeübertragung vom zweiten Teil (B) erhitzt wird.

12. Heizeinheit nach einem der Ansprüche 1 bis 11, dadurch gekennzeichnet, daß sie an einem Elektro-Haushaltsgerät angebracht ist.

13. Kaffeemaschine mit einer Heizeinheit nach einem der Ansprüche 1 bis 12.

## Claims

1. A heater unit for an electrical household appliance, the unit comprising a water circulation pipe (21), a heater element (22), and a selector member (10), the circulation pipe being in thermal relationship with the heater element (22), enabling the water contained in a tank (1) to be transferred to the selector member (10) respectively via a link column (3) disposed beneath the tank (1) and the circulation pipe (21), said column (3) being provided with a check valve (4), said circulation pipe (21) presenting a two-part (A, B) configuration each part being associated with a portion of the heater element (22), the second part (B) rising to bring the water to the selector member (10), the first part (A) extending between the link column (3) and the second part (B), the first part (A) extending at an angle relative to said second part (B), the unit being characterized in that the first part (A) extends in downwardly inclined manner in the water flow direction, and in that the selector member (10) has a first orifice (11) allowing hot water to escape under gravity, and a second orifice (12) presenting a constriction (12a) enabling steam to be produced from the water contained in the circulation pipe (21), the selector member (10) enabling the circulation pipe (21) to be put into communication with one or other of the orifices (11, 12).

2. A heater unit according to claim 1, characterized in that the first part (A) extends along an axis (x-x') presenting an inclination relative to its orthogonal projection on a horizontal plane that is greater than or equal to 4°, and that preferably lies in the range 5° to 10°.

3. A heater unit according to claim 1 or 2, characterized in that the second part (B) extends along an axis (y-y') presenting an inclination relative to its orthogonal projection on a horizontal plane, said inclination lying in the range 45° to 135°, and preferably lying in the range 45° to 100°.

4. A heater unit according to any one of claims 1 to 3, characterized in that at least one of the parts (A, B) has a curved shape defined by at least one radius of curvature.

5. A heater unit according to any one of claims 1 to 4, characterized in that the heater element (22) delivers heat uniformly over its entire length.

6. A heater unit according to any one of claims 1 to 5, characterized in that the heater element (22) is in thermal relationship with the circulation pipe (21) in the first part (A) over a fraction of the length of the heater element (22) that is shorter than the fraction of the length of the heater element (22) that is in thermal relationship with the circulation pipe (21) in the second portion (B).

7. A heater unit according to claim 6, characterized in that the distribution of heat transfer between the heater element (22) and the circulation pipe (21) corresponds to values lying in the range 35% to 45% in the first part (A) and to values lying in the range 55% to 65% in the second part (B).

8. A heater unit according to claim 6, characterized in that the distribution of heat transfer between the heater element (22) and the circulation pipe (21) corresponds in the first part (A) to a value lying in the range 20% to 30% of the total heat transfer.

9. A heater unit according to any one or claims 1 to 8, characterized in that it is constituted by two metal tubes in thermal relationship, one of which constitutes the water circulation pipe (21) the other metal tube providing a housing for the heater element (22).

10. A heater unit according to any one of claims 1 to 9, characterized in that the selector member (10) is constituted by a valve having at least three ports and suitable for putting the circulation pipe (21) into communication either with the first orifice (11) or with the second orifice (12).

11. A heater unit according to any one of claims 1 to 10, characterized in that the circulation pipe (21) beyond the second part (B) includes a segment (C) that is heated solely by thermal conduction from the second portion (B).

12. A heater unit according to any one of claims 1 to 11, characterized in that it is mounted in an electrical household appliance.

13. An electrical coffee maker including a heater unit according to any one of claims 1 to 12.
